(19) Europäisches Patentamt / European Patent Office / Office européen des brevets

(11) **EP 4 045 223 B1**

(12) **EUROPÄISCHE PATENTSCHRIFT**

(45) Veröffentlichungstag und Bekanntmachung des Hinweises auf die Patenterteilung:
**29.11.2023   Patentblatt 2023/48**

(21) Anmeldenummer: **20803066.8**

(22) Anmeldetag: **16.10.2020**

(51) Internationale Patentklassifikation (IPC):
**B23K 26/242** *(2014.01)*   **B23K 26/064** *(2014.01)*
**B23K 26/073** *(2006.01)*   **B23K 26/20** *(2014.01)*
**B23K 103/10** *(2006.01)*

(52) Gemeinsame Patentklassifikation (CPC):
**B23K 26/242; B23K 26/064; B23K 26/0734; B23K 26/206;** B23K 2103/10

(86) Internationale Anmeldenummer:
**PCT/EP2020/079269**

(87) Internationale Veröffentlichungsnummer:
**WO 2021/074419 (22.04.2021 Gazette 2021/16)**

(54) **LASERSCHWEISSVERFAHREN FÜR ECKVERBINDUNGEN VON WERKSTÜCKTEILEN**

LASER WELDING METHOD FOR CORNER CONNECTIONS OF WORKPIECE PARTS

PROCÉDÉ DE SOUDAGE AU LASER POUR RÉALISER DES ASSEMBLAGES EN COIN DE PARTIES DE PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2019   DE 102019215968**

(43) Veröffentlichungstag der Anmeldung:
**24.08.2022   Patentblatt 2022/34**

(73) Patentinhaber: **Trumpf Laser- und Systemtechnik GmbH**
**71254 Ditzingen (DE)**

(72) Erfinder:
• **SCHEIBLE, Philipp**
**71254 Ditzingen (DE)**
• **SEEBACH, Johannes**
**70193 Stuttgart (DE)**
• **BOCKSROCKER, Oliver**
**74343 Sachsenheim (DE)**

(74) Vertreter: **Trumpf Patentabteilung**
**Trumpf SE + Co. KG**
**TH550 Patente und Lizenzen**
**Johann-Maus-Straße 2**
**71254 Ditzingen (DE)**

(56) Entgegenhaltungen:
EP-A1- 1 037 290      EP-B1- 1 037 290
US-A1- 2016 254 501      US-A1- 2019 258 009

**Beschreibung**

Die Erfindung betrifft ein Laserschweißverfahren für Eckverbindungen von Werkstückteilen.

Laserschweißverfahren zur Verbindung von Werkstückteilen sind aus dem Stand der Technik bekannt, siehe, z.B. EP1037290A1 (Basis für den Oberbegriff des Anspruchs 1).

Die US 2017/0334021 A1 offenbart ein Laserschweißsystem, das bei der Herstellung von elektronischen Vorrichtungen wie Batterien verwendet wird, mit einer Laserquelle zur Erzeugung eines Laserstrahls mit einem Strahlprofil. Zur Änderung des Strahlprofils umfasst das Laserschweißsystem Strahlformungsmittel, zum Beispiel optische Elemente zur Beugung des Laserstrahls, und Abschirmungskomponenten, durch die zumindest ein Teil des Laserstrahls abgeschirmt werden kann. Durch die gezielte Strahlformung soll eine Verminderung der für das Schweißen notwendigen Leistung des Laserstrahls und unerwünschter Nebeneffekte bewirkt werden.

Die DE 10 2010 003 750 A1 offenbart ein Verfahren zur Veränderung des Profils eines Laserstrahls. Der Laserstrahl wird in das eine Faserende einer Multiclad-Faser eingekoppelt und aus dem anderen Ende der Multiclad-Faser ausgekoppelt. Dabei wird der einfallende Laserstrahl zumindest in den inneren Faserkern der Multiclad-Faser und/oder in einen äußeren Ringkern der Multiclad-Faser eingekoppelt. Dadurch wird eine Änderung des Profils des Laserstrahls nach der Auskopplung im Vergleich zu dem Laserstrahl vor der Einkopplung bewirkt.

Bei dem Verschweißen von Eckverbindungen von Werkstücken mit hierfür bisher verwendeten Verfahren können Instabilitäten, zum Beispiel in Form von Poren, in dem Werkstück entstehen und Spritzer des Schmelzmaterials ausgeworfen werden.

*Aufgabe der Erfindung*

Der Erfindung liegt die Aufgabe zugrunde, ein Laserschweißverfahren zur besonders stabilen Ausbildung von Eckverbindungen von Werkstückteilen ohne die Entstehung von Spritzern der Metallschmelze bereitzustellen, wie sie bei Batteriegehäusen besonders geschätzt werden.

*Kurze Beschreibung der Erfindung*

Diese Aufgabe wird gelöst durch ein Verfahren zum Laserschweißen eines Werkstücks, wobei mit einem Schweiß-Laserstrahl eine I-Naht am Eckstoß von zwei Werkstückteilen des Werkstücks geschweißt wird, wodurch eine Aluminiumverbindung zwischen den Werkstückteilen erzeugt wird, wobei zur Erzeugung des Schweiß-Laserstrahls ein Ausgangs-Laserstrahl in ein erstes Ende einer Multiclad-Faser, insbesondere einer 2in1-Faser, eingespeist wird, wobei die Multiclad-Faser zumindest eine Kernfaser und eine diese umgebende Ringfaser aufweist, wobei ein erster Teil LK der Laserleistung des Ausgangs-Laserstrahls in die Kernfaser und ein zweiter Teil LR der Laserleistung des Ausgangs-Laserstrahls in die Ringfaser eingespeist wird, wobei ein zweites Ende der Multiclad-Faser auf das Werkstück abgebildet wird, und wobei das Laserschweißen des Werkstücks durch Tiefschweißen erfolgt.

Das erfindungsgemäße Schweißverfahren, insbesondere die erfindungsgemäße Kombination von Werkstückgeometrie, Werkstückmaterial, Strahlformung am Laserstrahl und Verfahrensführung, bewirkt besonders stabile Schweißverbindungen bei gleichzeitiger Vermeidung von Spritzern. Die Schweißnaht in Form einer I-Naht zeichnet sich durch eine geringe Kerbwirkung und einen ungestörten Kraftfluss durch die Schweißnaht hindurch aus. Dies führt zu einer hohen Stabilität der I-Naht. Aluminium hat als Werkstoff ein vergleichsweise geringes Gewicht bei hoher Festigkeit und Langlebigkeit, sodass auch hierdurch die Stabilität der Schweißverbindung erhöht wird. Durch das Tiefschweißen werden besonders hohe Einschweißtiefen erzielt. Der aus der Multiclad-Faser austretende Laserstrahl weist einen Strahlquerschnitt mit einem Kernstrahl, der von der Kernfaser emittiert wird, und einem Ringstrahl auf, der von der Ringfaser emittiert wird. Dadurch wird die Spritzerbildung beim Tiefschweißen der I-Naht im Aluminiumwerkstoff minimiert. Außerdem wird eine Schweißnaht erzeugt, die eine glatte Nahtoberraupe und hohe Gasdichtigkeit aufweist, was sich besonders bei der Fertigung von Batteriegehäusen als gut geeignet erwiesen hat.

An einem Eckstoß liegen insbesondere zwei Werkstückteile mit ihren Enden unter einem Winkel aneinander an, vorzugsweise unter einem rechten Winkel oder einem näherungsweise rechten Winkel von 75° bis 105°. Bei der I-Naht am Eckstoß sind die Werkstückteile insbesondere derart angeordnet, dass die Längsachse eines ersten Werkstückteils in ihrer Verlängerung ein Ende eines zweiten Werkstückteils durchstößt, wobei sich die I-Naht über die gesamte Breite des ersten Werkstückteils quer, insbesondere senkrecht, zur Längsachse erstreckt.

Die Stoßfläche der Werkstückteile liegt insbesondere parallel oder nahezu parallel zur Strahlrichtung (Strahlausbreitungsrichtung) des SchweißLaserstrahls. Insbesondere ist die Stoßfläche der Werkstückteile mit einem maximalen Winkel von 15° bis -15°, bevorzugt 5° bis -5°, zur Strahlrichtung des Laserstrahls ausgerichtet. Typischerweise erstreckt sich eines der Werkstückteile senkrecht von der Stoßfläche weg, und eines der Werkstückteile erstreckt sich parallel zur Stoßfläche. Auf der Eingangsseite des SchweißLaserstrahls am Werkstück fluchten die Werkstückteile typischerweise bezüglich der Strahlrichtung. Die Werkstückteile bestehen im Wesentlichen aus Aluminium, und können eine Kunststoffbeschichtung, etwa zur elektrischen Isolation, aufweisen.

Beim erfindungsgemäßen Schweißverfahren im Tiefschweiß-Regime werden Laser mit vergleichsweise hoher Leistungsdichte verwendet, wodurch der Laser beim Schweißen Dampf erzeugt. Der Dampf verdrängt die beim Schweißen entstandene Schmelze. Dadurch bildet sich ein tiefes, dampfgefülltes Loch, die Dampfkapillare. Die Metallschmelze umfließt die Dampfkapillare und erstarrt an der Rückseite.

Beim Laserschweißen ohne Multiclad-Faser zur Erzeugung des Laserstrahls baut sich in Dampfkapillaren im Werkstück oftmals ein Überdruck auf, was zu Auswölbungen der Dampfkapillaren führt. Diese Auswölbungen vergrößern sich und öffnen sich explosionsartig, wobei Schmelze in Form von Spritzern ausgeworfen wird. Auch die Fluktuationen der Metallschmelze auf der Seite der Dampfkapillaren, die dem Laserstrahl zugewandt ist, führen oft zu Spritzern der Metallschmelze. In den Dampfkapillaren können sich scharfe Kanten ausbilden, die den Fluss der Metallschmelze behindern und damit das Entstehen von Spritzern fördern. Die Auswölbungen können außerdem zu Poren im Werkstück führen.

Die erfindungsgemäß zur Strahlformung eingesetzte Multiclad-Faser weist zumindest eine Kernfaser (Vollprofilfaser) und eine Ringfaser (Hohlprofilfaser) auf, die die Kernfaser umgibt. Die Ringfaser ist insbesondere als umlaufend geschlossene Faser mit einer Ausnehmung ausgebildet. Die Kernfaser und die Ringfaser können beliebige Querschnittsprofile aufweisen, zum Beispiel in Form von Quadraten. Bevorzugt weisen die Kernfaser und die Ringfaser einen kreisförmigen bzw. kreisringförmigen Querschnitt auf. Bevorzugt ist die Multiclad-Faser als 2in1-Faser mit der Kernfaser und einer Ringfaser ausgebildet. Der aus der Multiclad-Faser austretende Laserstrahl weist einen Strahlquerschnitt mit einem Kernstrahl, der von der Kernfaser emittiert wird, und einem Ringstrahl auf, der von der Ringfaser emittiert wird. Die Intensitäten von Kernstrahl und Ringstrahl sind durch den ersten Teil LK bzw. den zweiten Teil LR der eingespeisten Laserleistung des Ausgangs-Laserstrahls bestimmt.

Das Strahlprofil des Schweißlaserstrahls wird im Vergleich zum Ausgangs-Laserstrahl dahingehend verändert, dass durch das Zusammenspiel einer bestimmten Ringintensität mit einer bestimmten Kernintensität die Energieeinkopplung in das Werkstück so verändert wird, dass die Ausprägung der Dampfkapillare und die Schmelzbaddynamik beeinflusst wird. Dadurch wird ein Schweißen mit Strahlformung, insbesondere ein spritzerarmes Tiefschweißen bei sehr hohen Vorschüben bei Nahtoberraupengüte wie beim Wärmeleitschweißen ermöglicht.

Der Ringstrahlkann insbesondere bewirken, dass die Öffnung der Dampfkapillare auf der durch den Laserstrahl angestrahlten Seite des Werkstücks vergrößert wird und der Austritt von Gasen aus der Dampfkapillare erleichtert wird. Durch die Ringintensität wird also die Dampfkapillare im oberen Teil weiter geöffnet, sodass der Metalldampf ungehindert oder nahezu ungehindert ausströmen kann. Dadurch werden eine Ausbildung von Auswölbungen in der Dampfkapillare und die Entstehung von Spritzern größtenteils unterdrückt. Die Spritzerbildung wird minimiert, da der der Druck des Gases in der Dampfkapillare und entsprechend eine Wirkung auf das Schmelzbad verringert wird. Der Ringstrahl überträgt zudem einen Impuls von oben (in Ausbreitungsrichtung des Laserstrahls) in das Schmelzbad hinein, der in seiner Richtung der Beschleunigung von geschmolzenem Material an der Rückseite der Dampfkapillare entgegen gesetzt ist und auch dadurch die Spritzerbildung reduziert. Fluktuationen, die das Entstehen von Spritzern begünstigen, werden durch den Ringstrahl unterdrückt. Die Wärmeleitung in der Schweißnaht führt zu einer weiteren Verbreiterung der Schweißnaht. Es wird eine Schweißnaht erzeugt, die eine glatte Nahtoberraupe (vergleichbar mit Wärmeleitschweißungen) und hohe Gasdichtigkeit aufweist.

Die Erfinder haben mittels Hochgeschwindigkeitsaufnahmen beobachtet, dass im Rahmen der Erfindung eine Reduzierung der Spritzerbildung um bis zu 90% im Vergleich zum Stand der Technik (ohne die erfindungsgemäße Strahlformung) erreicht werden kann. Die Erfinder haben diese signifikante Reduzierung der Spritzerbildung zudem bei Vorschubgeschwindigkeiten beobachtet, welche um Faktor 7,5 höher waren (ca. 30 m/min) als beim Stand der Technik (ca. 4 m/min). Die Erfinder haben außerdem festgestellt, dass durch Anwendung der erfindungsgemäßen Technologie deutlich glattere Schweißnahtoberraupen erzielt werden können als bei Schweißnähten, welche mit anderen Schweißverfahren geschweißt wurden.

Das erfindungsgemäße Verfahren eignet sich durch die Verwendung der I-Naht am Eckstoß, der Verwendung von Aluminium und des Tiefschweißens mit einer Multiclad-Faser zur Herstellung stabiler Eckverbindungen in Batteriegehäusen mit geringem Kurzschlussrisiko und hoher Gasdichtigkeit.

Bevorzugte Ausführungsformen der Erfindung

Bei einer bevorzugten Ausführungsform des erfindungsgemäßen Verfahrens sind der erste Teil LK der Laserleistung für die Kernfaser und der zweite Teil LR der Laserleistung für die Ringfaser gewählt mit $0,15 \leq LK/(LK+LR) \leq 0,50$, bevorzugt $0,25 \leq LK/(LK+LR) \leq 0,45$, besonders bevorzugt $LK/(LK+LR) = 0,35$.

Diese jeweiligen Anteile der Laserleistung für die Kernfaser und die Ringfaser bewirken einen Schweißprozess mit großer Eindringtiefe bei gleichzeitiger Vermeidung von Spritzern und haben sich besonders bei der Fertigung von Batteriegehäusen bewährt. Bei geringerem Anteil der Laserleistung für die Kernfaser überwiegt der Anteil der Laserleistung für die Ringfaser, sodass der Laserschweißprozess wieder vergleichbar mit dem Fall des Laserschweißens unter Verwendung einer homogenen Faser wird. Dies gilt auch für einen größeren Anteil der Laserleistung für die Kernfaser als oben angegeben, wobei dann der Anteil der Laserleistung für die Kernfaser gegenüber dem Anteil für die Ringfaser überwiegt.

Vorteilhaft ist eine Ausführungsform, bei der das Laserschweißen mit einer Vorschubgeschwindigkeit v erfolgt, mit v ≥ 7 m/min, insbesondere mit v ≥ 10 m/min, bevorzugt v ≥ 20 m/min, besonders bevorzugt v ≥30 m/min. Diese Vorschubgeschwindigkeiten sind im Rahmen der Erfindung bei typischen Laserleistungen von 2 bis 6 kW, Wellenlänge 1030nm, bei einer typischen Werkstückdicke am Stoß (des in Strahlrichtung kleineren Werkstückteils) von 0,5mm-2mm spritzerarm gut realisierbar.

Bevorzugt ist weiterhin eine Ausführungsform, bei der das zweite Ende der Multiclad-Faser um einen Vergrößerungsfaktor VF vergrößert auf das Werkstück abgebildet wird, mit VF > 1,0, insbesondere mit VF ≥ 1,5, bevorzugt VF ≥ 2,0. Bei einer solchen Vergrößerung kann ein vergleichsweise kleiner Divergenzwinkel des Laserstrahls erreicht werden; die Reflexion des Laserstrahls am Werkstück wird minimiert. Durch einen kleinen Divergenzwinkel kann auch das Verbrennen von Isoliermaterial besser vermieden werden. Der Schweißprozess kann mit einer größeren Toleranz im Hinblick auf den Abstand des Fokus des Schweiß-Laserstrahls von der Oberfläche des Werkstücks durchgeführt werden.

Ebenfalls bevorzugt ist eine Ausführungsform, bei der der Ausgangs-Laserstrahl mit einem Festkörperlaser, insbesondere einem Scheibenlaser, erzeugt wird. Festkörperlaser sind kostengünstig und haben in sich in der Praxis für die Erfindung bewährt. Scheibenlaser zeichnen sich durch gute Kühlmöglichkeiten des Laserkristalls im Betrieb aus, was sich positiv auf die Fokussierbarkeit des Laserstrahls auswirkt.

Bevorzugt ist auch eine Ausführungsform, bei der die Multiclad-Faser so gewählt ist, dass für einen Durchmesser DK der Kernfaser und einen Durchmesser DR der Ringfaser gilt: 2,5 ≤ DR/DK ≤ 6, bevorzugt 3 ≤ DR/DK ≤ 5. Typischerweise gilt für die Kernfaser 50 $\mu$m ≤ DK ≤ 250 $\mu$m oder 100 $\mu$m ≤ DK ≤ 200 $\mu$m. Typischerweise gilt weiterhin für die Ringfaser 100 $\mu$m ≤ DR ≤ 1000 $\mu$m oder 150 $\mu$m ≤ DR ≤ 900 $\mu$m oder 150 $\mu$m ≤ DR ≤ 500 $\mu$m. Bei diesen Verhältnissen der Durchmesser lässt sich der Schweißprozess mit vergleichsweise geringen Prozesszeiten durchführen.

Vorteilhaft ist weiterhin eine Ausführungsform, bei der der Schweiß-Laserstrahl mit seinem Fokus in Strahlausbreitungsrichtung einen maximalen Höhen-Offset MHO zur Oberfläche des Werkstücks aufweist, mit |MHO| ≤ 1,5 mm, bevorzugt |MHO| ≤ 1,0 mm, besonders bevorzugt |MHO| ≤ 0,5 mm. In diesem Bereich des Höhenoffsets prägt sich ein lokales ringförmiges Minimum der Intensitätsverteilung zwischen dem Kernstrahl und dem Ringstrahl aus. Dies wirkt sich insbesondere positiv auf die Verhinderung von Spritzern während des Schweißprozesses aus.

Ebenfalls vorteilhaft ist eine Ausführungsform, bei der der Schweiß-Laserstrahl einen maximalen lateralen Offset MLO auf dem Werkstück gegenüber einer Stoßfläche der Werkstückteile aufweist, mit |MLO| ≤ 0,2 mm, bevorzugt IMLOI ≤ 0,1 mm. In diesem Bereich des lateralen Offset MLO wird bei dem Schweißprozess eine vergleichsweise glatte, insbesondere über die entstehende Ecke runde Schweißnahtoberraupe erzielt.

Vorteilhaft ist eine Ausführungsform, bei der die Werkstückteile während des Laserschweißens flächig verklemmt sind, wobei eine maximale Spaltbreite MS zwischen den Werkstückteilen erhalten wird, mit MS ≤ 0,1 mm. Bei diesen Spaltbreiten wird eine homogene, porenarme Verteilung des Materials in der Schweißnaht beim Schweißen erzielt.

Bevorzugt ist zudem eine Variante, bei der die Werkstückteile am Eckstoß in Strahlausbreitungsrichtung des Schweiß-Laserstrahls fluchtend oder mit einer Stufe mit einer Stufenhöhe SH zueinander angeordnet sind,

mit SH ≤ 0,3 mm,
bevorzugt SH ≤ 0,2 mm,
besonders bevorzugt SH ≤ 0,1 mm. Mit einer solchen maximalen Stufenhöhe haben sich Schweißnähte guter Qualität fertigen lassen.

Die Erfindung umfasst auch eine Verwendung des Verfahrens nach einer der vorhergehenden Ausführungsformen zur Fertigung eines Batteriegehäuses, wobei die Werkstückteile Teile des Batteriegehäuses sind, wobei insbesondere eines der Werkstückteile ein das Batteriegehäuse abschließender Deckel ist. Die Teile des Batteriegehäuses lassen sich durch das Verfahren besonders stabil, schnell und ohne Spritzer verbinden. Die gefertigten Gehäuse sind zuverlässig dicht, insbesondere gasdicht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1a    eine schematische Ansicht einer Schweißsituation eines ersten Eckstoßes und eines Laserstrahls zum Verschweißen des Eckstoßes gemäß der Erfindung;

Fig. 1b    eine schematische Ansicht einer Schweißsituation eines zweiten Eckstoßes und eines Laserstrahls zum Verschweißen des Eckstoßes gemäß der Erfindung;

Fig. 1c    eine schematische Ansicht eines ersten und eines zweiten Werkstückteils in einer eckförmigen Anordnung mit einem Spalt in einer Schweißsituation gemäß der Erfindung;

Fig. 1d    eine schematische Ansicht einer Schweißsituation gemäß der Erfindung mit einem ersten und einem zweiten Werkstückteil in einer eckförmigen Anordnung, wobei der Laserstrahl entlang der Oberfläche der Werstückteile zu der Stoßfläche der Werkstückteile versetzt ist;

Fig. 1e    eine schematische Ansicht einer Schweißsituation gemäß der Erfindung mit einem ersten und einem zweiten Werkstückteil in einer eckförmigen Anordnung, wobei der Fokus des Laserstrahls von der Oberfläche der Werkstückteile beabstandet ist;

Fig. 1f    eine schematische Ansicht einer Schweißsituation gemäß der Erfindung mit einem ersten und einem zweiten Werkstückteil in einer eckförmigen Anordnung, wobei die Werkstückteile eine Stufe ausbilden;

Fig. 2    eine Anordnung zur Erzeugung eines Laserstrahls mit einer Multiclad-Faser für die Erfindung;

Fig. 3a    das schematische Intensitätsprofil eines aus einer Multiclad-Faser wie in Figur 2 dargestellt ausgekoppelten Laserstrahls in einer Richtung quer zur Ausbreitungsrichtung des Laserstrahls für die Erfindung;

Fig. 3b    schematisch einen flächigen Querschnitt des aus der Multiclad-Faser ausgekoppelten Laserstrahls von Fig. 3a quer zur Ausbreitungsrichtung des Laserstrahls;

Fig. 4    eine schematische Darstellung eines Schweißbades und einer Dampfkapillare während des erfindungsgemäßen Schweißverfahrens und mit dem aus der Multiclad-Faser ausgekoppelten Laserstrahl;

Fig. 5a    eine Schnittansicht durch ein geschweißtes Werkstück an einem Eckstoß im Bereich der Schweißnaht, die mit einem Laserstrahl erzeugt wurde, der aus einer Single-Core-Faser ausgekoppelt wurde;

Fig. 5b    eine Schnittansicht durch ein geschweißtes Werkstück an einem Eckstoß im Bereich der Schweißnaht, die erfindungsgemäß mit einem Laserstrahl erzeugt wurde, der aus einer Multiclad-Faser ausgekoppelt wurde.

Die Erfindung betrifft die Erzeugung einer I-Naht am Eckstoß bei Aluminiumverbindungen, einer Fügesituation wie sie typischerweise bei Batteriegehäusen (sogenannten "Can-Caps") vorliegt. Beim Laserschweißen von Batteriezellgehäusen können aufgrund der hohen geforderten Vorschubgeschwindigkeiten während des Schweißprozesses oftmals Schweißspritzer sowie ungleichmäßige Schweißnahtoberraupen entstehen. Mit der vorliegenden Erfindung, welche ein mittels einer Multiclad-Faser erzeugtes Strahlprofil vorsieht, wird die Schweißnaht geglättet und die Spritzerbildung minimiert, was zu geringerem Kurzschlussrisiko und einer höheren Dichtigkeit führt. Dadurch ist eine produktionssichere Steigerung der Vorschubgeschwindigkeiten im Vergleich zum Stand der Technik deutlich möglich.

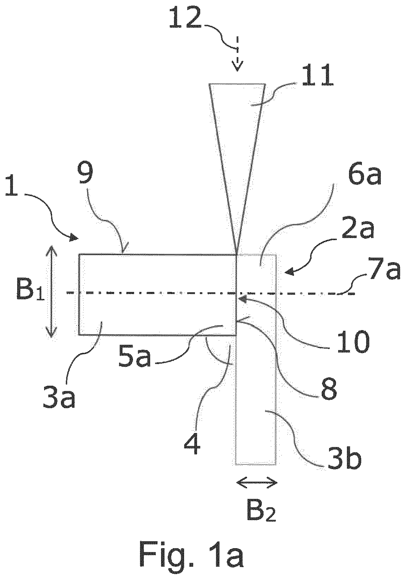

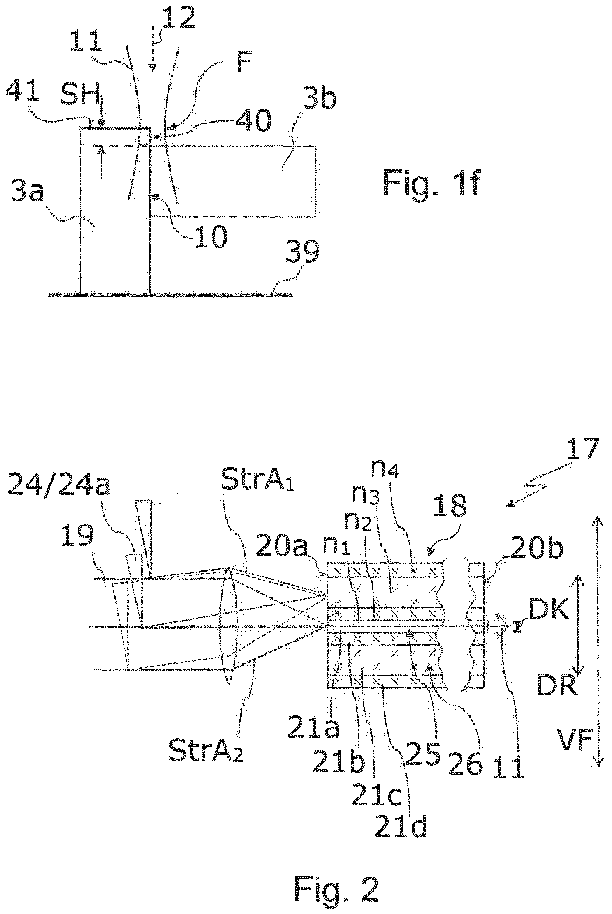

Die **Fig. 1a** zeigt ein Werkstück **1** mit einem ersten Eckstoß **2a,** der ein erstes Werkstückteil **3a** und ein zweites Werkstückteil **3b** aufweist. Das erste Werkstückteil 3a weist hier eine größere Breite $B_1$ auf als eine Breite $B_2$ des zweiten Werkstückteils 3b. Die Werkstückteile 3a, 3b liegen mit einer rechtwinkligen Innenecke **4** aneinander an. Ein stumpfes Ende **5a** des ersten Werkstückteils 3a ist an einem Ende **6a** des zweiten Werkstückteils 3b angeordnet. Die Längsachse **7a** des ersten Werkstückteils 3a durchstößt in ihrer Verlängerung das Ende 6a des zweiten Werkstückteils 3b. Zur Erzeugung einer Schweißnaht in Form einer I-Naht **8** wird die Oberfläche **9** des Werkstücks 1 an der Stoßfläche **10,** an der die Werkstückteile 3a, 3b aneinander anliegen, mit einem Schweiß-Laserstrahl **11** bestrahlt. Der Schweiß-Laserstrahl 11 ist aus einer Multiclad-Faser (s. Fig. 2) ausgekoppelt. Die Stoßfläche 10 der Werkstückteile 3a, 3b liegt parallel zur Strahlausbreitungsrichtung **12** des Schweiß-Laserstrahls 11. Das erste (breitere) Werkstückteil 3a erstreckt sich senkrecht von der Stoßfläche 10 weg, und das zweite (weniger breite) Werkstückteil 3b erstreckt sich parallel zur Stoßfläche 10. Auf der Eingangsseite des Schweiß-Laserstrahls 11 am Werkstück 1 fluchten die Werkstückteile 3a, 3b bezüglich der Strahlausbreitungsrichtung 12. Der Schweiß-Laserstrahl 11 wird von der Seite des Werkstücks 1 umfassend die zwei Werkstückteile 3a, 3b eingestrahlt, die der rechtwinkligen Innenecke 4 des Werkstücks 1 abgewandt ist. Die Werkstückteile 3a, 3b sind jeweils aus einem aluminiumhaltigen Material, insbesondere Aluminium 3003, gefertigt und weisen typischerweise eine Breite $B_1$, $B_2$ von 0,5 mm bis 2,0 mm auf. Die Anordnung der Werkstückteile 3a, 3b stellt insbesondere eine schematische Darstellung einer Eckverbindung eines Batteriegehäuses dar.

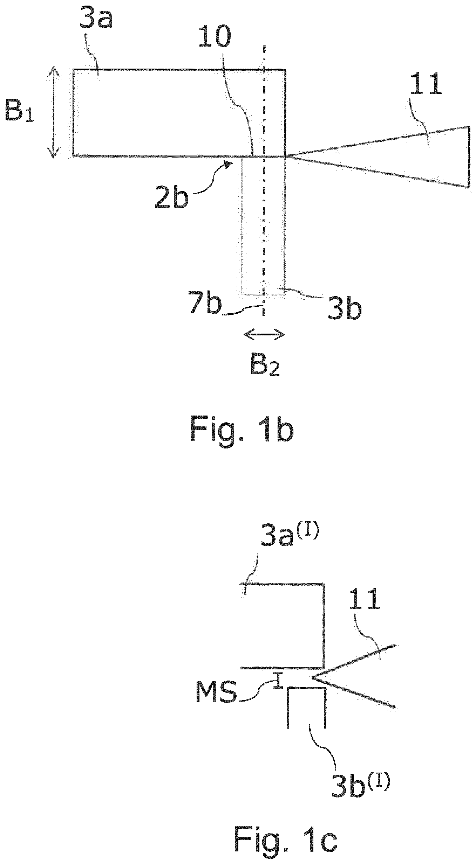

Die in **Fig. 1b** gezeigte Schweißsituation ist ähnlich der in Figur 1a gezeigten Schweißsituation. Im Unterschied zu der Anordnung aus Fig. 1a erstreckt sich das zweite (weniger breite) Werkstückteil 3b senkrecht von der Stoßfläche 10 weg, und das erste (breitere) Werkstückteil 3a erstreckt sich parallel zur Stoßfläche 10. Das dünnere, zweite Werkstückteil 3b erstreckt sich insbesondere senkrecht zum dickeren, ersten Werkstückteil 3a. Das dünnere, zweite Werkstückteil 3b wird insbesondere an der Seite des dickeren, ersten Werkstückteils 3a angeschweißt. Die Längsachse **7b** des zweiten Werkstückteils 3b durchstößt in ihrer Verlängerung das Ende 5b des ersten Werkstückteils 3a.

**Fig. 1c** zeigt beispielhaft eine schematische Ansicht eines ersten und eines zweiten eckförmig angeordneten Werkstückteils 3a$^{(I)}$, 3b$^{(I)}$ in einer erfindungsgemäßen Schweißsituation, die mit einer maximalen Spaltbreite **MS** von 0,1 mm zwischen den Werkstückteilen 3a$^{(I)}$, 3b$^{(I)}$ angeordnet sind, und mit einem Schweiß-Laserstrahl 11. Man beachte, dass die Spaltbreite MS und die Strahldivergenz des Schweiß-Laserstrahls 11 stark übertrieben dargestellt sind (gilt entsprechend auch für die anderen Figuren).

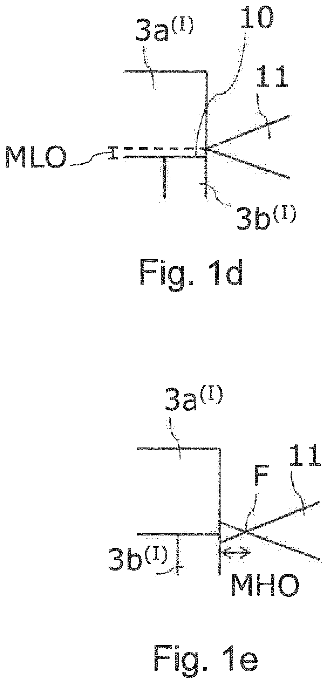

**Fig. 1d** zeigt beispielhaft eine schematische Ansicht einer Schweißsituation mit einem ersten und einem zweiten Werkstückteil 3a$^{(I)}$, 3b$^{(I)}$ in einer eckförmigen Anordnung, wobei der Schweiß-Laserstrahl 11 entlang der Oberfläche der Werkstückteile 3a$^{(I)}$, 3b$^{(I)}$ zu der Stoßfläche 10 der Werkstückteile 3a$^{(I)}$, 3b$^{(I)}$ versetzt ist. Der Schweiß-Laserstrahl 11 weist insbesondere einen maximalen lateralen Offset **MLO** von 0,2 mm gegenüber der Stoßfläche 10 der Werkstückteile 3a$^{(I)}$, 3b$^{(I)}$ auf.

**Fig. 1e** zeigt beispielhaft eine schematische Ansicht einer Schweißsituation mit einem ersten und einem zweiten Werkstückteil 3a$^{(I)}$, 3b$^{(I)}$ in einer eckförmigen Anordnung, wobei der Fokus F des Schweiß-Laserstrahls 11 von der Oberfläche der Werkstückteile 3a$^{(I)}$, 3b$^{(I)}$ nach oben beabstandet ist. Der Fokus F des Schweiß-Laserstrahls 11 zum Verschweißen der Werkstückteile 3a$^{(I)}$, 3b$^{(I)}$ weist insbesondere einen maximalen Höhen-Offset **MHO** zur Oberfläche des Werkstücks von 1,5 mm auf. Man beachte, das ein Höhen-Offset MHO auch dadurch eingerichtet sein kann, dass der Fokus F unter der Oberfläche der Werkstücke liegt (nicht näher dargestellt).

Die **Fig. 1f** zeigt beispielhaft in schematischer Ansicht eine Schweißsituation für die Erfindung, wie sie beim Schweißen eines Batteriegehäuse infolge Fügetoleranzen häufig vorkommt. Das erste Werkstückteil 3a ist hier vertikal ausgerichtet und sitzt auf einem Boden **39** auf; es ist durch den Dosenkörper ("can") des Batteriegehäuses oder einen Teil des Dosenkörpers ausgebildet. Dieser Dosenkörper soll mit einem Deckel ("cap") verschlossen werden. Das zweite Werkstückteil 3b bildet diesen Deckel oder einen Teil davon aus. Die Werkstückteile 3a, 3b sollen an ihrer Stoßfläche 10 gasdicht miteinander verschweißt werden.

In Richtung der (hier) vertikalen Strahlausbreitungsrichtung 12, in der sich der Schweiß-Laserstrahl 11 ausbreitet, sind die Werkstückteile 3a, 3b hier leicht versetzt angeordnet; benachbart zur Stoßfläche 10 bildet sich entsprechend eine Stufe **40** aus. Die Stufenhöhe **SH** der Stufe 40 in Richtung R beträgt typischerweise maximal 0,3 mm, bevorzugt maximal 0,1 mm.

Der Fokus F des Schweiß-Laserstrahls 11 wird typischerweise an der Kante der dem einfallenden Schweißlaserstrahl 10 zugewandten Oberseite **41** des auf dem Boden 39 stehenden, ersten Werkstückteils 3a ausgerichtet, hier ohne einen Höhen-Offset. Der Fokus F ist hier durch die Engstelle der lateralen Begrenzungslinien des Schweiß-Laserstrahls 11 erkennbar.

Die **Fig. 2** zeigt ein Lasersystem **17** zur Erzeugung eines Schweiß-Laserstrahls **11**, mit einer Multiclad-Faser **18** für die Erfindung. Ein Ausgangs-Laserstrahl **19** wird in ein erstes Faserende **20a** der Multiclad-Faser 18, die in radialer Richtung Schichten **21a, 21b, 21c, 21d** verschiedener Brechungsindizes $n_1$, $n_2$, $n_3$, $n_4$ aufweist, eingekoppelt. Weiterhin wird der Schweiß-Laserstrahl 11 aus einem zweiten Ende **20b** der Multiclad-Faser 18 ausgekoppelt. Das Strahlprofil des austretenden Schweiß-Laserstrahls 11 wird verändert, indem der Ausgangs-Laserstrahl 19 durch eine Ablenkoptik **24,** hier in Gestalt eines optischen Keils **24a,** mit unterschiedlichen Leistungsanteilen LK, LR zumindest in eine innere Kernfaser **25** mit dem Durchmesser **DK** der Multiclad-Faser 18 und in eine äußere Ringfaser **26** mit dem Durchmesser **DR** der Multiclad-Faser 18 eingekoppelt wird. Dabei wird in der für die Erfindung vorgesehenen, mittleren Stellung des optischen Keils 24a ein Strahlanteil **StrA$_1$** des Ausgangs-Laserstrahls 19 durch den optischen Keil 24aabgelenkt und in die Schicht 21c eingespeist, während sich ein zweiter Strahlanteil **StrA$_2$** des Ausgangs-Laserstrahls 19 weiter ungestört in Bezug auf die Strahlrichtung des Ausgangs-Laserstrahls 19 vor dem optischen Keil 24a geradlinig ausbreitet und in die Schicht 21a eingespeist wird. In der gezeigten Ausführungsform ist die Multiclad-Faser 18 als 2in1-Faser mit der inneren Kernfaser 25 und der äußeren Ringfaser 26 ausgebildet. Die innere Kernfaser 25 ist insbesondere durch die Schicht 21a und die Ringfaser 26 insbesondere durch die Schicht 21c ausgebildet. Die anderen Schichten 21b, 21d dienen als Auskleidungen, um ein Hindurchtreten der Strahlanteile StrA$_1$ , StrA$_2$ zwischen der inneren Kernfaser 25 und der äußeren Ringfaser 26 zu verhindern. Insbesondere sind die Brechzahlen $n_1$, der Schicht 21a und die Brechzahl $n_3$ der Schicht 21c größer als die Brechzahl $n_2$ der Schicht 21b und die Brechzahl $n_4$ der Schicht 21d. Das zweite Ende 20b der Multiclad-Faser 18 wird auf das Werkstück (s. Fig. 1a) insbesondere mit einem Vergrößerungsfaktor **VF** von mehr als 2,0 vergrößert abgebildet (nicht näher dargestellt).

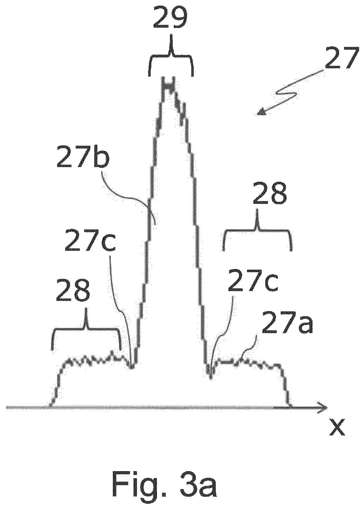

Die **Fig. 3a** zeigt das Profil der Intensität **27** eines aus einer Multiclad-Faser 18 ausgekoppelten Schweiß-Laserstrahls 11 (s. z.B. Fig. 2) in einer Richtung **x** quer zur Ausbreitungsrichtung des Schweiß-Laserstrahls 11 nahe der Oberfläche 9 des Werkstücks (s. Fig. 1a) mit dem Fokus innerhalb des bevorzugten maximalen Höhen-Offsets MHO zur Oberfläche 9 des Werkstücks von 1,5 mm (s. Fig. 1c). Die Intensität **27a** des Ringstrahls **28,** also des Laserstrahls aus der Ringfaser 26 (s. Fig. 2), fällt hier in Richtung des Kernstrahls **29,** des Laserstrahls aus der Kernfaser 25 (s. Fig. 2), und nach außen hin, in radialer Richtung weg von dem Kernstrahl 29, ab. Dazwischen ist die Intensität 27a des Ringstrahls 28 näherungsweise konstant. Die Intensität **27b** des Kernstrahls 29 ist höher als die des Ringstrahls 28. Zwischen dem Ringstrahl 28 und dem Kernstrahl 29 befindet sich somit ein lokales Minimum **27c** der Intensität 27.

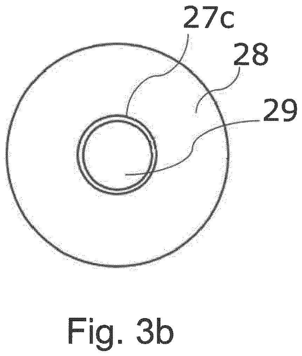

Die **Fig. 3b** zeigt schematisch einen flächigen Querschnitt des aus der Multiclad-Faser 18 ausgekoppelten Schweiß-Laserstrahls 11 von Fig. 3a quer zur Ausbreitungsrichtung des Schweiß-Laserstrahls 11 nahe der Oberfläche des Werkstücks innerhalb des bevorzugten maximalen Höhen-Offsets MHO zur Oberfläche des Werkstücks von 1,5 mm mit dem Ringstrahl 28, dem Kernstrahl 29 sowie dem lokalen Minimum der Intensität 27c zwischen dem Ringstrahl 28 und dem Kernstrahl 29. Das Profil von Ringstrahl 28 und Kernstrahl 29 können jeweils auch eine andere Form haben, zum Beispiel viereckig sein. Die Integration der Intensität über den Kernstrahl 29 ergibt die Strahlungsleistung des Kernstrahls 29, die insbesondere 25% bis 50% der gesamten Leistung des Schweiß-Laserstrahls 11 beträgt.

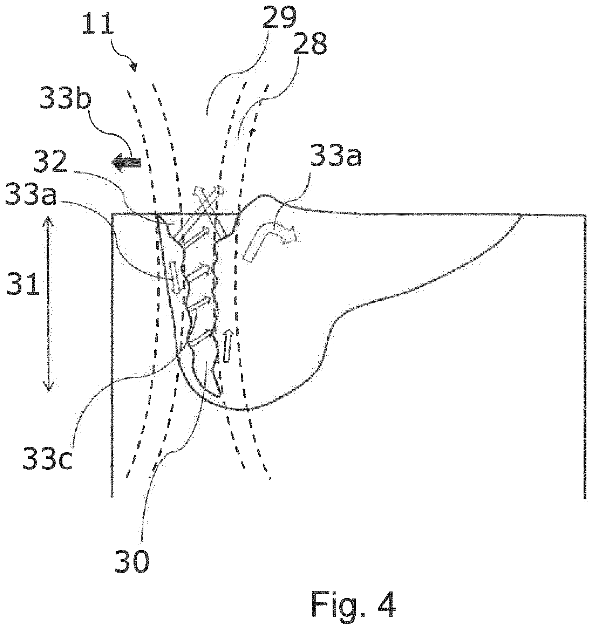

Die **Fig. 4** zeigt eine schematische Darstellung des Schmelzbades und der darin gelegenen Dampfkapillare 30 während des erfindungsgemäßen Schweißverfahrens mit einem aus der Multiclad-Faser ausgekoppelten Laserstrahl (s. Fig. 3). Der Kernstrahl 29 bestimmt im Wesentlichen die Tiefe **31** der Dampfkapillare 30. Die Schmelze fließt an der Vorderseite der Dampfkapillare 30 in Bezug auf die Vorschubrichtung **33b** des Schweiß-Laserstrahls 11 nach unten, in Richtung auf den Boden der Dampfkapillare 30. An der Hinterseite der Dampfkapillare 30 fließt die Schmelze nach oben und sodann nach hinten weg vom Schweiß-Laserstrahl 11. Durch den Ringstrahl 28 wird die Öffnung **32** der Dampfkapillare 30 vergrößert und der Austritt von Gasen aus der Dampfkapillare 30 erleichtert. Der Staudruck des beim Schweißverfahren entstehenden Gases und somit der jeweilige Impuls, den die Gasteilchen auf die Schmelze übertragen, wird niedriger. Dadurch wird die Fließ-Geschwindigkeit in der Schmelze verkleinert. Es werden weniger Spritzer der Schmelze während des Schweißverfahrens ausgeworfen. Außerdem wirkt der Ringstrahl 28 mit einem Impuls auf die Schmelze, der der Flußrichtung der Schmelze hin zur Oberfläche der Dampfkapillare 30 entgegen gerichtet ist und ebenfalls einem Auswurf von Spritzern entgegenwirkt. Die Flussrichtung **33a** des geschmolzenen Materials ist durch nicht ausgefüllte Pfeile schematisch angedeutet. Der Gasfluss in der Dampfkapillare 30 ist durch Pfeile **33c** gekennzeichnet.

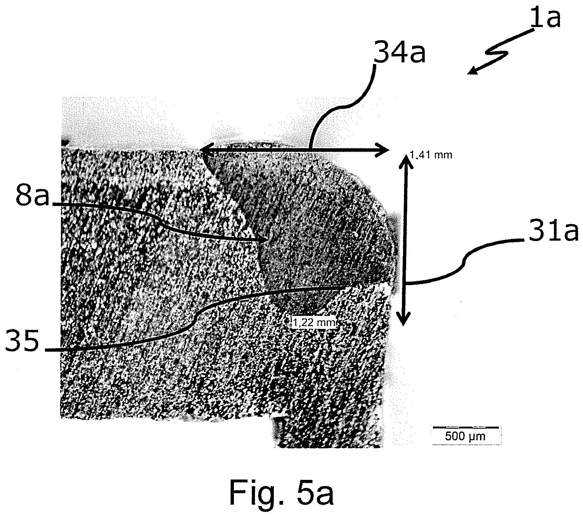

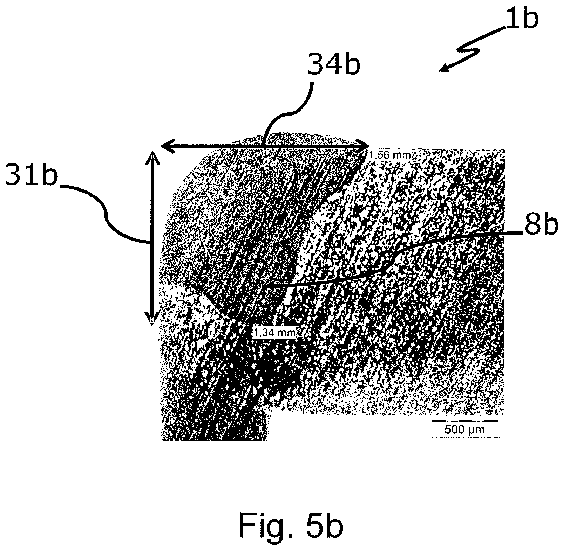

Die **Fig. 5a** zeigt eine Schnittansicht durch ein geschweißtes Werkstück **1a** mit einer I-Naht **8a,** die mit einem Laserstrahl erzeugt wurde, der aus einer Single-Core-Faser ausgekoppelt wurde. Die Breite **34a** und Tiefe **31a** der Schweißnaht 8a ist durch Balken dargestellt. Die Schweißnaht 8a weist eine vergleichsweise geringe Breite 34a (vgl. Fig. 5b) von 1,41 mm bei einer Tiefe 31a der Schweißnaht 8a von 1,22 mm auf. Die Dampfkapillare, durch die die Schweißnaht erzeugt wurde, wies eine entsprechende relativ geringe Breite auf, sodass beim Laserschweißen entstandene Gase nur vergleichsweise langsam aus der Dampfkapillare entweichen konnten. Eine durch das Strahlprofil geformte Kante **35** erschwert den Fluss von Schmelzmaterial weg vom Laserstrahl nach außen weiter. Durch den beim Schweißen entstehenden Überdruck werden Auswölbungen der zu der Schweißnaht 8a zugehörigen Dampfkapillare ausgebildet und Spritzer werden ausgeworfen. Die Schweißnaht 8a weist zudem eine vergleichsweise hohe Welligkeit auf.

Die **Fig. 5b** zeigt eine Schnittansicht durch ein geschweißtes Werkstück **1b** mit einer I-Naht **8b** , die mit einem Laserstrahl erzeugt wurde, der aus einer Multiclad-Faser (s. Fig. 2) ausgekoppelt wurde. Die Schweißnaht 8b weist eine größere Breite 34b von 1,56 mm als bei der in Fig. 5a gezeigten Schweißnaht 8a bei einer Tiefe 31b der Schweißnaht 8b von 1,34 mm auf. Die Dampfkapillare, durch die die Schweißnaht erzeugt wurde, wies eine entsprechende größere Breite auf, sodass beim Laserschweißen entstandene Gase vergleichsweise leicht aus der Dampfkapillare entweichen konnten. Dadurch wird ein Überdruck in der zu der Schweißnaht 8b zugehörigen Dampfkapillare verhindert und Spritzer werden unterdrückt. Die Schweißnaht 8b weist zudem eine vergleichsweise geringe Welligkeit auf.

**Patentansprüche**

1.  Verfahren zum Laserschweißen eines Werkstücks (1, 1b),

    wobei mit einem Schweiß-Laserstrahl (11) eine I-Naht (8, 8b) am Eckstoß (2a, 2b) von zwei Werkstückteilen (3a, 3b, 3a$^{(l)}$, 3b$^{(l)}$) des Werkstücks (1, 1b), welche im Wesentlichen aus Aluminium bestehen, geschweißt wird, wodurch eine Aluminiumverbindung zwischen den Werkstückteilen (3a, 3b, 3a$^{(l)}$, 3b$^{(l)}$) erzeugt wird, **dadurch gekennzeichnet, dass** zur Erzeugung des Schweiß-Laserstrahls (11) ein Ausgangs-Laserstrahl (19) in ein erstes Ende (20a) einer Multiclad-Faser (18), insbesondere einer 2in1-Faser, eingespeist wird, wobei die Multiclad-Faser (18) zumindest eine Kernfaser (25) und eine diese umgebende Ringfaser (26) aufweist, wobei ein erster Teil LK der Laserleistung des Ausgangs-Laserstrahls (19) in die Kernfaser (25) und ein zweiter Teil LR der Laserleistung des Ausgangs-Laserstrahls (19) in die Ringfaser (26) eingespeist wird, wobei ein zweites Ende (20b) der Multiclad-Faser (18) auf das Werkstück (1, 1b) abgebildet wird,

und wobei das Laserschweißen des Werkstücks (1, 1b) durch Tiefschweißen erfolgt.

2. Verfahren nach Anspruch 1, **dadurch gekennzeichnet, dass** der erste Teil LK der Laserleistung für die Kernfaser (25) und der zweite Teil LR der Laserleistung für die Ringfaser (26) gewählt sind mit

$$0{,}15 \leq LK/(LK+LR) \leq 0{,}50,$$

bevorzugt $0{,}25 \leq LK/(LK+LR) \leq 0{,}45$,
besonders bevorzugt $LK/(LK+LR)=0{,}35$.

3. Verfahren nach einem der vorhergehenden Ansprüche, **dadurch gekennzeichnet, dass** das Laserschweißen mit einer Vorschubgeschwindigkeit v erfolgt, mit

$$v \geq 7 \text{ m/min,}$$

insbesondere

$$v \geq 10 \text{ m/min,}$$

bevorzugt $v \geq 20$ m/min,
besonders bevorzugt $v \geq 30$ m/min.

4. Verfahren nach einem der vorhergehenden Ansprüche, **dadurch gekennzeichnet, dass** das zweite Ende (20b) der Multiclad-Faser (18) um einen Vergrößerungsfaktor VF vergrößert auf das Werkstück (1, 1b) abgebildet wird, mit $VF > 1{,}0$,

insbesondere $VF \geq 1{,}5$,
bevorzugt $VF \geq 2{,}0$.

5. Verfahren nach einem der vorhergehenden Ansprüche, **dadurch gekennzeichnet, dass** der Ausgangs-Laserstrahl (19) mit einem Festkörperlaser, insbesondere einem Scheibenlaser, erzeugt wird.

6. Verfahren nach einem der vorhergehenden Ansprüche, **dadurch gekennzeichnet, dass** die Multiclad-Faser (18) so gewählt ist, dass für einen Durchmesser DK der Kernfaser (25) und einen Durchmesser DR der Ringfaser (26) gilt:

$$2{,}5 \leq DR/DK \leq 6,$$

bevorzugt $3 \leq DR/DK \leq 5$.

7. Verfahren nach einem der vorhergehenden Ansprüche, **dadurch gekennzeichnet, dass** der Schweiß-Laserstrahl (11) mit seinem Fokus in Strahlausbreitungsrichtung (12) einen maximalen Höhen-Offset MHO zur Oberfläche des Werkstücks (1, 1b) aufweist, mit

$$|MHO| \leq 1{,}5 \text{ mm,}$$

bevorzugt $|MHO| \leq 1{,}0$ mm,
besonders bevorzugt $|MHO| \leq 0{,}5$ mm.

8. Verfahren nach einem der vorhergehenden Ansprüche, **dadurch gekennzeichnet, dass** der Schweiß-Laserstrahl (11) einen maximalen lateralen Offset MLO auf dem Werkstück (1, 1b) gegenüber einer Stoßfläche (10) der Werkstückteile (3a, 3b, 3a$^{(I)}$, 3b$^{(I)}$) aufweist, mit

$$|MLO| \leq 0{,}2 \text{ mm,}$$

bevorzugt $|MLO| \leq 0{,}1$ mm.

9. Verfahren nach einem der vorhergehenden Ansprüche, **dadurch gekennzeichnet, dass** die Werkstückteile (3a, 3b, 3a$^{(I)}$, 3b$^{(I)}$) während des Laserschweißens flächig verklemmt sind, wobei eine maximale Spaltbreite MS zwischen den Werkstückteilen (3a, 3b, 3a$^{(I)}$, 3b$^{(I)}$) erhalten wird, mit $MS \leq 0{,}1$ mm.

10. Verfahren nach einem der vorhergehenden Ansprüche, **dadurch gekennzeichnet, dass** die Werkstückteile (3a, 3b, 3a$^{(I)}$, 3b$^{(I)}$) am Eckstoß (2a, 2b) in Strahlausbreitungsrichtung (12) des Schweiß-Laserstrahls (11) fluchtend oder mit einer Stufe (40) mit einer Stufenhöhe SH zueinander angeordnet sind, mit $SH \leq 0{,}3$ mm,

bevorzugt $SH \leq 0{,}2$ mm,
besonders bevorzugt $SH \leq 0{,}1$ mm.

11. Verwendung des Verfahrens nach einem der vorhergehenden Ansprüche zur Fertigung eines Batteriegehäuses, wobei die Werkstückteile (3a, 3b, 3a$^{(I)}$, 3b$^{(I)}$) Teile des Batteriegehäuses sind, insbesondere wobei eines der Werkstückteile (3a, 3b, 3a$^{(I)}$, 3b$^{(I)}$) ein das Batteriegehäuse abschließender Deckel ist.

**Claims**

1. A method for laser welding a workpiece (1, 1b),

wherein an I-seam (8, 8b) at the corner joint (2a, 2b) of two workpiece parts (3a, 3b, 3a$^{(I)}$, 3b$^{(I)}$) of the workpiece (1, 1b), which consist substantially of aluminium, is welded with a welding laser beam (11), whereby an aluminium connection is produced between the workpiece parts (3a, 3b, 3a$^{(l)}$, 3b$^{(l)}$),

**characterised in that**

to generate the welding laser beam (11), an output laser beam (19) is fed into a first end (20a) of a multi-clad fibre (18), in particular a 2-in-1 fibre,

wherein the multi-clad fibre (18) has at least one core fibre (25) and a ring fibre (26) surrounding it, wherein a first part LK of the laser power of the output laser beam (19) is fed into the core fibre (25) and a second part LR of the laser power of the output laser beam (19) is fed into the ring fibre (26),

wherein a second end (20b) of the multi-clad fibre (18) is projected onto the workpiece (1, 1b), and wherein the laser welding of the workpiece (1, 1b) is carried out by deep penetration welding.

2. The method according to claim 1, **characterised in that** the first part LK of the laser power for the core fibre (25) and the second part LR of the laser power for the ring fibre (26) are selected with

$$0.15 \leq LK/(LK + LR) \leq 0.50,$$

preferably $0.25 \leq LK/(LK + LR) \leq 0.45$, particularly preferably $LK/(LK + LR) = 0.35$.

3. The method according to any one of the preceding claims, **characterised in that** the laser welding follows at a feed rate v with

$v \geq 7$ m/min, in particular
$v \geq 10$ m/min,
preferably $v \geq 20$ m/min,
particularly preferably $v \geq 30$ m/min.

4. The method according to any one of the preceding claims, **characterised in that** the second end (20b) of the multi-clad fibre (18) is projected onto the workpiece (1, 1b) in a manner enlarged by a magnification factor VF,

with VF > 1.0,
in particular $VF \geq 1.5$,
preferably $VF \geq 2.0$.

5. The method according to any one of the preceding claims, **characterised in that** the output laser beam (19) is generated with a solid-state laser, in particular a disk laser.

6. The method according to any one of the preceding claims, **characterised in that** the multi-clad fibre (18) is selected such that for a diameter DK of the core fibre (25) and a diameter DR of the ring fibre (26) the following applies:

$$2.5 \leq DR/DK \leq 6,$$

preferably $3 \leq DR/DK \leq 5$.

7. The method according to any one of the preceding claims, **characterised in that** the welding laser beam (11) with the focus thereof in the beam propagation direction (12) has a maximum height offset MHO with respect to the surface of the workpiece (1, 1b), with

$$|MHO| \leq 1.5 \text{ mm,}$$

preferably $|MHO| \leq 1.0$ mm,
particularly preferably $|MHO| \leq 0.5$ mm.

8. The method according to any one of the preceding claims, **characterised in that** the welding laser beam (11) has a maximum lateral offset MLO on the workpiece (1, 1b) relative to an abutting surface (10) of the workpiece parts (3a, 3b, 3a$^{(l)}$, 3b$^{(l)}$), with

$$|MLO| \leq 0.2 \text{ mm,}$$

preferably $|MLO| \leq 0.1$ mm.

9. The method according to any one of the preceding claims, **characterised in that** the workpiece parts (3a, 3b, 3a$^{(l)}$, 3b$^{(l)}$) are clamped flat during the laser welding, wherein a maximum gap width MS between the workpiece parts (3a, 3b, 3a$^{(l)}$, 3b$^{(l)}$) is obtained, with $MS \leq 0.1$ mm.

10. The method according to any one of the preceding claims, **characterised in that** the workpiece parts (3a, 3b, 3a$^{(l)}$, 3b$^{(l)}$) at the corner joint (2a, 2b) in the beam propagation direction (12) of the welding laser beam (11) are arranged aligned or with a step (40) having a step height SH in relation to one another,

with $SH \leq 0.3$ mm,
preferably $SH \leq 0.2$ mm,
particularly preferably $SH \leq 0.1$ mm.

11. A use of the method according to any one of the preceding claims for the production of a battery housing, wherein the workpiece parts (3a, 3b, 3a$^{(l)}$, 3b$^{(l)}$) are parts of the battery housing,

in particular wherein one of the workpiece parts (3a, 3b, 3a$^{(l)}$, 3b$^{(l)}$) is a cover closing off the battery housing.

**Revendications**

1. Procédé de soudage au laser d'une pièce (1, 1b),

dans lequel, à l'aide d'un faisceau laser de soudage (11), une soudure bout à bout (8, 8b) au niveau de la soudure d'angle (2a, 2b) de deux parties de pièce (3a, 3b, 3a$^{(l)}$, 3b$^{(l)}$) de la pièce (1, 1b), lesquelles se composent essentiellement d'aluminium, est soudé, moyennant quoi une liaison en aluminium est produite entre les parties de pièce (3a, 3b, 3a$^{(l)}$, 3b$^{(l)}$), **caractérisée en ce que**
pour générer le faisceau laser de soudage (11), un faisceau laser de sortie (19) est injecté dans une première extrémité (20a) d'une fibre à gainage multiple (18), en particulier une fibre deux en un,
dans lequel la fibre à gainage multiple (18) comporte au moins une fibre centrale (25) et une fibre annulaire (26) entourant la fibre centrale,
dans lequel une première partie LK de la puissance laser du faisceau laser de sortie (19) est injectée dans la fibre centrale (25) et une seconde partie LR de la puissance laser du faisceau laser de sortie (19) est injectée dans la fibre annulaire (26),
dans lequel une seconde extrémité (20b) de la fibre à gainage multiple (18) est imagée sur la pièce (1, 1b),
et dans lequel le soudage au laser de la pièce (1, 1b) est réalisé par soudage profond.

2. Procédé selon la revendication 1, **caractérisé en ce que** la première partie LK de la puissance laser pour la fibre centrale (25) et la seconde partie LR de la puissance laser pour la fibre annulaire (26) sont sélectionnées, où

$$0,15 \leq LK/(LK + LR) \leq 0,50,$$

de préférence $0,25 \leq LK/(LK + LR) \leq 0,45$,
de manière particulièrement préférée $LK/(LK + LR) = 0,35$.

3. Procédé selon l'une quelconque des revendications précédentes, **caractérisé en ce que** le soudage au laser est réalisé à une vitesse d'avance v, où

$v \geq 7$ m/min, en particulier
$v \geq 10$ m/min,
de préférence $v \geq 20$ m/min,
de manière particulièrement préférée $v \geq 30$ m/min.

4. Procédé selon l'une quelconque des revendications précédentes, **caractérisé en ce que** la seconde extrémité (20b) de la fibre à gainage multiple (18) est imagée sur la pièce (1, 1b) agrandie d'un facteur de grossissement VF,

où VF > 1,0,
en particulier $VF \geq 1,5$,
de préférence $VF \geq 2,0$.

5. Procédé selon l'une quelconque des revendications précédentes, **caractérisé en ce que** le faisceau laser de sortie (19) est généré à l'aide d'un laser solide, en particulier un laser à disque.

6. Procédé selon l'une quelconque des revendications précédentes, **caractérisé en ce que** la fibre à gainage multiple (18) est choisie de telle sorte que pour un diamètre DK de la fibre centrale (25) et un diamètre DR de la fibre annulaire (26), s'applique ce qui suit :

$$2,5 \leq DR/NSP \leq 6,$$

de préférence $3 \leq DR/DK \leq 5$.

7. Procédé selon l'une quelconque des revendications précédentes, **caractérisé en ce que** le faisceau laser de soudage (11) avec son foyer dans la direction de propagation du faisceau (12) présente un décalage en hauteur maximal MHO par rapport à la surface de la pièce (1, 1b), où

$$|MHO| \leq 1,5 \text{ mm,}$$

de préférence $|MHO| \leq 1,0$ mm,
de manière particulièrement préférée $|MHO| \leq 0,5$ mm.

8. Procédé selon l'une quelconque des revendications précédentes, **caractérisé en ce que** le faisceau laser de soudage (11) présente un décalage latéral maximal MLO sur la pièce (1, 1b) par rapport à une surface de butée (10) des pièces (3a, 3b, 3a$^{(l)}$, 3b$^{(l)}$), où

$$|MLO| \leq 0,2 \text{ mm,}$$

de préférence $|MLO| \leq 0,1$ mm.

9. Procédé selon l'une quelconque des revendications précédentes, **caractérisé en ce que** les pièces (3a, 3b, 3a$^{(l)}$, 3b$^{(l)}$) sont serrées à plat lors du soudage au laser, dans lequel est obtenue une largeur de la fente maximale MS entre les pièces (3a , 3b, 3a$^{(l)}$, 3b$^{(l)}$), où MS $\leq$ 0,1 mm.

**10.** Procédé selon l'une quelconque des revendications précédentes, **caractérisé en ce que** les pièces (3a, 3b, 3a(I), 3b(I)) au niveau de la soudure d'angle (2a, 2b) dans la direction de propagation du faisceau (12) du faisceau laser de soudage (11) sont disposées les unes par rapport aux autres alignées ou à un cran (40) présentant une hauteur de cran SH,

où $SH \leq 0,3$ mm,
de préférence $SH \leq 0,2$ mm,
de manière particulièrement préférée $SH \leq 0,1$ mm.

**11.** Utilisation du procédé selon l'une quelconque des revendications précédentes pour la fabrication d'un boîtier de batterie, dans laquelle les pièces (3a, 3b, 3a(I), 3b(I)) font partie du boîtier de batterie, en particulier dans laquelle l'une des parties de pièce (3a, 3b, 3a(I), 3b(I)) est un couvercle fermant le boîtier de batterie.

Fig. 1a

Fig. 1b

Fig. 1c

3a$^{(I)}$  10

11

MLO

3b$^{(I)}$

Fig. 1d

3a$^{(I)}$

F  11

3b$^{(I)}$

MHO

Fig. 1e

Fig. 1f

Fig. 2

Fig. 3a

Fig. 3b

11

29
28

33b

32

33a

33a

31

33c

30

Fig. 4

Fig. 5a

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1037290 A1
- US 20170334021 A1

- DE 102010003750 A1